# EUROPEAN PATENT SPECIFICATION

(11) **EP 2 135 011 B1**
(45) Date of publication and mention of the grant of the patent: **16.11.2016**
(21) Application number: 08705188.4
(22) Date of filing: 09.01.2008
(51) Int. Cl.: F24F 12/00, F24F 11/00, F24F 1/00

(54) **AIR CONDITIONING EQUIPMENT FOR RETURN AIR**
KLIMAANLAGE FÜR RÜCKLUFT
MATÉRIEL DE CONDITIONNEMENT DE L'AIR POUR L'AIR DE REPRISE

(30) Priority: 11.01.2007 SE 0700050
(43) Date of publication of application: 23.12.2009
(73) Proprietor: Swegon AB, 535 23 Kvänum (SE)
(72) Inventor: BERG, Gunnar, S-521 30 Falköping (SE)
(74) Representative: Valea AB
(86) International application number: PCT/SE2008/000015
(87) International publication number: WO 2008/085115

(56) References cited:
- WO-A1-94/25804
- WO-A1-03/036182
- SE-B- 454 461
- US-A- 4 836 096
- US-A- 5 024 263
- US-A1- 2002 036 238
- US-A1- 2007 032 187
- US-A1- 2007 289 322

## Description

### TECHNICAL FIELD

The present invention relates to a reduction of the electrical effect of fans in an air conditioning equipment having ingoing and off air when a varying part of the off air is brought over to the ingoing air to be recirculated to the ventilated space.

### BACKGROUND OF THE INVENTION

There exist different conditions when a return air admixture to the ingoing air is wanted, such as e.g., in shopping centres where heat and cold are distributed by air. In these systems there is normally required a larger amount of air to be able to carry the heating effect, and the cooling effect, respectively, which is motivated from a hygienic point of view. To increase the amount of outdoor air, alternatively, normally leads to an increased use of energy to condition the air to the right temperature.

There are different needs to regulate the return air admixture. One is to take care of the temperatures that exists indoor and outdoor and to control the mixture in such a way that least possible amount of energy is used to reach the desired temperature of the air introduced. Another is to continuously determine any form of hygienic factor, normally the amount of CO₂ and to control the admixture so that the air is regarded as fresh, independent of the number of visitors in the building.

SE-454,461-B discloses a ventilation system with heat and a method to control the system. The system comprises an heat exchanger with channels for outdoor air, off air and return air, ingoing air, ingoing air fan, off air fan, mixing chamber for mixing return air into ingoing air as well as a heating battery.

SE-523,832 discloses temperature compensation in an air conditioning apparatus and method for controlling the mass flow in an air conditioning apparatus. Compensation of the temperature is based on that air of different temperatures have different densities and whereby one makes sure that a desired volume flows with the density, mass flow, in an air stream.

US-5,024,263 discloses a method and apparatus for controlling air flows and pressures during air conditioning. The apparatus comprises a heat exchanger, off air fans, air filters, and heating and cooling elements.

US 4836096 discloses an apparatus according to the preamble of claim 1.

This known technique is not disclosing equipment having a simple control of a return air flow based on an ingoing air fan only.

### THE TECHNICAL PROBLEM

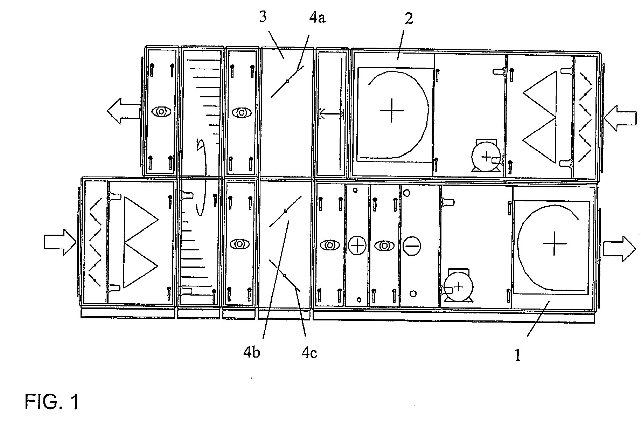

The classical solution, herein shown in FIG. 1, for mixing return air into the ingoing air uses one or more sucking ingoing air fans 1, and one or more pressing off air fans 2 and a mixing part 3. The mixing part 3 consists of three slide valves 4a, 4b, and 4c, which are functionally connected with each other. If the slide valve between the air streams, the return slide valve 4b, is controlled towards an open position, the two other slide valves 4a and 4c, the regulating slide valves for ingoing air and off air, are regulated towards a closed position and vice verse. By calibrating the degree of opening the return air flow is regulated. The positioning of the fans guarantees the functioning that the return air is pushed from the off air side to the ingoing air side, by means of the pressure situation which will occur between the fans. The fans are driven using a constant number of revolutions. When starting up the air conditioning apparatus the different air flows are adjusted to designed values with the aid of externally positioned closing valves (not shown) at the end positions of the return air slide valve 4b (minimum and maximum return air admixture). Ingoing air flow and off air flow are adjusted when the return air slide valve 4b is closed and the return air flow is adjusted when the return air slide valve 4b is open.

This solution has its drawbacks, inter alia in that the return air passes both fans 1 and 2, and in that the ingoing air flow is constantly controlled by the designed air flow, which is only necessary when a maximum heating effect, or cooling effect, alternatively, is to be distributed. Both cause an unnecessary high use of electrical energy.

### SUMMARY OF THE PRESENT INVENTION

The present invention has the aim of solving this problem and in particular to reduce the electrical power required at return air admixture systems in air conditioning equipments.

### DETAILED DISCLOSURE OF THE PRESENT INVENTION

The present invention relates in particular to an air conditioning equipment according to claim 1.

In a preferred embodiment the means for return air flow is a sllide valve.

In a preferred embodiment the means for measuring the different air flows are pressure measuring means.

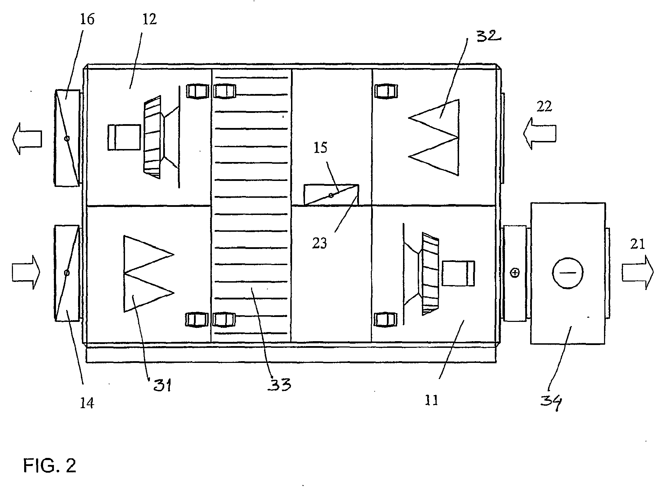

Further aspects of the present invention will be evident from the following detailed description of an embodiment of the present invention with reference to FIG. 2 of the accompanying drawing.

### Definitions

The term ingoing air means herein air which is provided to an ingoing air flow to a space.

The term outdoor air means herein the air which is taken from the outside of a building to be ventilated.
The term off air means herein the air which is drawn from a space.
The term outgoing air means herein the air which leaves the building which is ventilated.
The term return air means herein that part of the off air which is returned to the ingoing air.

The solution to the problem, cf. FIG. 2, is to mechanically separate and individually regulate the different slide valves and that the off air fan is placed, in the air flow, subsequent to the return air slide valve. The solution can thereby utilize the development of fans and electronics made during the last years, which facilitates an efficient and rational handling of the air. The air conditioning equipment comprises an ingoing air fan 11 arranged in an ingoing air channel 21, and an off air fan 12 arranged in an off air channel 22. Both ingoing air fan and off air fan are speed controlled and contain equipment 13 to measure air flow. In the ingoing air flow there is an outdoor air slide valve 14, which is provided for adjustable degree of opening. Between the ingoing air flow channel 21 and the off air flow channel 22 there is a return air flow channel 23, which channel 23 is provided with a return air slide valve 15, which is equipped for an adjustable degree of opening. The off air channel 22 is further provided with an outgoing air slide valve 16. A sensor (not shown) is installed to be able to determine the addition of outdoor air. A control program, software, controls and regulates the fans 11 and 12 and the slide valves 14,15 so that the functioning is secured.

Using the new position of the offair fan there is no guarantee that the return air is driven from the offair side to the ingoing air side by means of the pressure differences which occur in the system. This will now become secured by individually regulating the different slide valves and the speed controlled fans. The effect of the present solution is thereby that the return air will now only pass one fan, the ingoing air fan 11. An estimation gives, if the return air is set to 50% of the off air flow, that the energy demand to the off air fan 12 will be reduced with more than 50%, the larger return air flow the larger reduction of the energy demand, as the outgoing air is reduced and thereby the speed of the fan 12 of the offair side. Further, the ingoing air can be adjusted to the actual level required so that the air shall be able to distribute the need for heat, or cold, alternatively. To reduce the amount of air means a substantial reduction of the electrical power consumed by a fan and thereby the electrical energy used. Start-up is faciliated as the software guarantees that the equipment is operated with the correect air flows without unneccessary restrictions which means losses.

The air conditioning equipment according to FIG. 2 is controlled by a control and regulating software. By continuously monitoring signals from sensors, which signals are based on the ingoing air, off air, and outdoor air flows, and calculating the respective air flows, the control software can control the speed of the fans 11 and 12, the degree of opening of the outdoor air slide valve 16, and the return slide valve 14, respectively, to the conditions desired. As an alternative to monitoring and calculating outgoing air and/or outdoor air flows, the off air flow or the return air flow can be used.

The monitoring is normally made using indirect measurement of pressure which is then transferred into flow. In a control and regulating system all monitoring and calculations as well as regulation of air flows are made via outgoing signals to suitable places. Ingoing air arid off air flows are regulated in a most energy efficient way by adjusting the speed of the fans.

The invention is not restricted to the above disclosed example of an embodiment, but modifications are contemplated within the framework of the accompanying claims. For example, a simplified solution may without monitoring sensor signals, be created based on empirically created algorithms.

## Claims

1. An air conditioning equipment of a building for return air admixture of off air into ingoing air, which equipment comprises
- a speed controllable ingoing air fan (11) in the ingoing air flow channel (21) arranged to regulate requested ingoing air flow;
- a speed controllable outgoing air fan (12) in the off air flow channel (22) arranged to regulate requested outgoing air flow;
- a section (23) for return air flow controlled by an adjusting means to regulate return air flow;
- a control and regulating system which comprises a monitoring and calculation unit arranged, based on one or more sensors present in the buiding to individually regulate first and second air flow means (14, 15) and speed controllable fans (11, 12) to provide a desired return air admixture;
**characterized in that**
- said speed controllable ingoing air fan (11) is placed In the air flow direction subsequent to the section (23) for return air flow;
- said speed controllable outgoing air fan (12) is placed in the air flow direction subsequent to the section (23) for return air flow;
- said first air flow means (14) regulates addition of outdoor air, and is placed in the ingoing air stream in the air flow direction prior to the section (23) for return air flow;
- said second air flow means (15) regulates the return air flow, and is placed in the section (23) for return air flow, whereby
- said first and second air flow means (14,15) are individually regulated in sequence such that when said second air flow means (15) is regulated to a required degree of opening, the first air flow means (14) has a full degree of opening, and when said second air flow means (15) has a full degree of opening, then said first air flow means (14) is arranged to provide a required degree of opening to balance the need for outdoor air flow and return air flow,
and **In that**
- means for measuring ingoing and outgoing air flows are arranged at inlets of the speed controllable fans (11, 12) present in the air conditioning equipment for monitoring ingoing air flow and one or more of the following air flows, outdoor air flow, outgoing air flow, or return air flow, which means are arranged to provide output signals to the monitoring and calculation unit to control the outgoing and ingoing air flows determined.

2. Air conditioning equipment according to claim 1, wherein the second air flow means (15) is a slide valve.

3. Air conditioning equipment according to claim 1, wherein the air conditioning equipment further comprises means for monitoring two air flows of the outdoor flow, outgoing air flow and the return air flow, which means is arranged to provide output signals to the monitoring and calculation unit to control the outdoor and outgoing air flows determined.

4. Air conditioning equipment according to one or more of the preceding claims, wherein the means for measuring the different air flows are pressure measuring means.

## Patentansprüche

1. Klimatisierungsausrüstung eines Gebäudes für Rückluft-Beimischung von Abluft in Zuluft, welche Ausrüstung umfasst
- ein im Zuluft-Strömungskanal (21) angeordnetes geschwindigkeitskontrolliertes Zuluftgebläse (11) zum Regulieren eines angeforderten Zuluftstroms;
- ein im Abluft-Strömungskanal (22) angeordnetes geschwindigkeitskontrolliertes Abluftgebläse (12) zum Regulieren eines angeforderten Abluftstroms;
- einen durch eine Stelleinrichtung zum Regulieren von Rückluftstrom gesteuerten Abschnitt (23) für Rückluftstrom;
- ein Steuer- und Regelsystem, das eine angeordnete Überwachungs- und Berechnungseinheit umfasst, basierend auf einem oder mehreren in dem Gebäude vorhandenen Sensoren zum individuellen Regulieren erster und zweiter Luftströmungseinrichtungen (14, 15) und geschwindigkeitkontrollierter Gebläse (11, 12) zum Bereitstellen einer gewünschten Rückluftbeimischung; **dadurch gekennzeichnet, dass**
- das geschwindigkeitskontrollierte Zuluftgebläse (11) in der Luftströmungsrichtung im Anschluss an den Abschnitt (23) für Rückluftstrom platziert ist;
- das geschwindigkeitskontrollierte Abluftgebläse (12) im Anschluss an den Abschnitt (23) für die Rückluftstrom platziert ist;
- besagte erste Luftströmungseinrichtung (14) eine Zugabe von Außenluft reguliert, und im Zuluftstrom in der Luftströmungsrichtung vor dem Abschnitt (23) für Rückluftströmung angeordnet ist;
- besagte zweite Luftströmungseinrichtung (15) die Rückluftströmung reguliert, und in dem Abschnitt (23) für Rückluftströmung angeordnet ist, wobei
- erste und zweite Luftströmungseinrichtungen (14, 15) individuell in Reihe reguliert werden, so dass, wenn besagte zweite Luftströmungseinrichtung (15) auf einen erforderlichen Öffnungsgrad reguliert wird, die erste Luftströmungseinrichtung (14) einen vollständigen Öffnungsgrad aufweist, und wenn besagte zweite Luftströmungseinrichtung (15) einen vollen Öffnungsgrad hat, die erste Luftströmungseinrichtung (14) angeordnet ist, um einen erforderlichen Grad an Öffnung zum Ausgleichen eines Bedarfs an Außenluftstrom und Rückluftstrom zu bieten, und dass
- Mittel zum Messen von Zuluft- und Abluftströmen an Einlässen der in der Klimatisierungsausrüstung vorhandenen geschwindigkeitskontrollierten Gebläse (11, 12) angeordnet sind zum Überwachen von Zuluftstrom und einem oder mehreren der folgende Luftströme, Außenluftstrom, Abluftstrom oder Rückluftstrom, welche Mittel angeordnet sind, um Ausgangssignale für die Überwachungs- und Berechnungseinheit zum Steuern der bestimmten Abluftund Zuluftströme zur Verfügung zu stellen.

2. Klimatisierungsausrüstung nach Anspruch 1, wobei die zweite Luftströmungseinrichtung (15) ein Schiebeventil ist.

3. Klimatisierungsausrüstung nach Anspruch 1, wobei die Klimatisierungsausrüstung weiterhin Mittel zur Überwachung von zwei Luftströmen aus dem Außenluftstrom, dem Abluftstrom und dem Rückluftstrom umfasst, welches Mittel angeordnet ist, um Ausgangssignale für die Überwachungs- und Berechnungseinheit zum Steuern der bestimmten Abluft- und Zuluftströme zur Verfügung zu stellen.

4. Klimatisierungsausrüstung nach einem oder mehr der vorangehenden Ansprüche, bei dem die Mittel zum Messen der verschiedenen Luftströmen Druckmessmittel sind.

## Revendications

1. Matériel de conditionnement de l'air d'un bâtiment pour un mélange d'air de reprise formé d'air aspiré dans l'air entrant, lequel matériel comprend
- un ventilateur d'air entrant à vitesse réglable (11) dans le canal d'écoulement d'air entrant (21) permettant de réguler un écoulement d'air entrant demandé ;
- un ventilateur d'air sortant à vitesse réglable (12) dans le canal d'écoulement d'air aspiré (22) permettant de réguler un écoulement d'air sortant demandé ;
- une partie (23) d'écoulement d'air de reprise contrôlée par un dispositif de réglage permettant de réguler un écoulement d'air de reprise ;
- un système de commande et de régulation comprenant une unité de surveillance et de calcul conçue pour réguler individuellement, au moyen d'un ou plusieurs capteurs présents dans le bâtiment, des premier et deuxième moyens d'écoulement d'air (14, 15) et des ventilateurs à vitesse réglable (11, 12) pour produire un mélange d'air de reprise désiré ;
**caractérisé en ce que**
- ledit ventilateur d'air entrant à vitesse réglable (11) est placé dans la direction d'écoulement d'air après la partie (23) d'écoulement d'air de reprise ;
- ledit ventilateur d'air sortant à vitesse réglable (12) est placé dans la direction d'écoulement d'air après la partie (23) d'écoulement d'air de reprise ;
- ledit premier moyen d'écoulement d'air (14) régule l'ajout d'air extérieur, et est placé dans le flux d'air entrant dans la direction d'écoulement d'air avant la partie (23) d'écoulement d'air de reprise ;
- ledit deuxième moyen d'écoulement d'air (15) régule l'écoulement d'air de reprise, et est placé dans la partie (23) d'écoulement d'air de reprise, dans lequel
- lesdits premier et deuxième moyens d'écoulement d'air (14, 15) sont régulés individuellement de manière séquentielle, de telle sorte que, lorsque ledit deuxième moyen d'écoulement d'air (15) est régulé à un niveau d'ouverture requis, le premier moyen d'écoulement d'air (14) a un niveau d'ouverture complet, et lorsque ledit deuxième moyen d'écoulement d'air (15) a un niveau d'ouverture complet, ledit premier moyen d'écoulement d'air (14) fournit un niveau d'ouverture requis pour équilibrer le besoin en écoulement d'air extérieur et en écoulement d'air de reprise,
et **en ce que**
- des moyens de mesure des écoulements d'air entrant et sortant sont disposés au niveau d'entrées des ventilateurs à vitesse réglable (11, 12) présents dans le matériel de conditionnement de l'air, afin de surveiller l'écoulement d'air entrant et l'un ou plusieurs des écoulements d'air parmi l'écoulement d'air extérieur, l'écoulement d'air sortant ou l'écoulement d'air de reprise, c'est-à-dire que des moyens servent à fournir des signaux de sortie à l'unité de surveillance et de calcul pour contrôler les écoulements d'air sortant et entrant déterminés.

2. Matériel de conditionnement de l'air selon la revendication 1, dans lequel le deuxième moyen d'écoulement d'air (15) est un tiroir.

3. Matériel de conditionnement de l'air selon la revendication 1, dans lequel le matériel de conditionnement de l'air comprend en outre des moyens de surveillance de deux écoulements d'air parmi l'écoulement d'air extérieur, l'écoulement d'air sortant ou l'écoulement d'air de reprise, lesquels moyens servent à fournir des signaux de sortie à l'unité de surveillance et de calcul pour contrôler les écoulements d'air extérieur et sortant déterminés.

4. Matériel de conditionnement de l'air selon l'une quelconque des revendications précédentes, dans lequel les moyens de mesure des différents écoulements d'air sont des moyens de mesure de pression.
